# EUROPEAN PATENT APPLICATION

(11) **EP 2 058 698 A1**
(43) Date of publication of application: **13.05.2009**
(21) Application number: 07767799.5
(22) Date of filing: 28.06.2007
(51) Int. Cl.: G02F 1/167

(54) **ELECTROPHORETIC DISPLAY MEDIUM**

(30) Priority: 23.08.2006 JP 2006226352
(71) Applicant: Brother Kogyo Kabushiki Kaisha, Nagoya, Aichi 467-8561 (JP)
(72) Inventor: OSHIKA, Yumiko, Nagoya-shi Aichi 467-8561 (JP)
(74) Representative: Kuhnen & Wacker
(86) International application number: PCT/JP2007/063006
(87) International publication number: WO 2008/023495

(57) **Abstract**

A plurality of hydrophobic child particles are bonded to the hydrophilic surfaces of mother particles of white charged particles (50) and black charged particles (60) which are dispersed in a display liquid (40). Accordingly, even if surfaces of a display electrode layer (12) and a back electrode layer (22), which includes a metal oxide, are hydrophilic, the hydrophobic child particles act to prevent the hydrophilic mother particle from adhering to the surfaces. Thus, even if the direction of an electric field is switched repeatedly, it may be possible to prevent the white charged particles (50) and the black charged particles (60) from adhering to the surfaces of the display electrode layer (12) and the back electrode layer (22), thereby preventing deterioration in contrast of an image displayed on a display substrate (10). Further, by controlling the coverage factor of the child particles with respect to a surface area of the mother particle within the range from 18 to 35% inclusive, it may be possible to obtain an optimal contrast for the image displayed on the display substrate (10).

## Description

### Technical Field

The present invention relates to an electrophoretic display medium, and more specifically, to an electrophoretic display medium that displays an image utilizing the electrophoresis phenomenon.

### Background Art

Conventionally, an electrophoretic display apparatus that can display an image on a display panel (electrophoretic display medium) utilizing the electrophoresis phenomenon is known. This display panel includes a transparent display substrate and a back substrate disposed to face the display substrate. On a surface of each of these display substrate and back substrate, an electrode is formed, and at least the electrode formed on the surface of the display substrate is transparent. Further, between these display substrate and back substrate, a display liquid is enclosed with a spacer placed therebetween, and two kinds of charged particles are dispersed in the display liquid. These charged particles are typically black charged particles and white charged particles that are charged to a polarity different from the polarity of the black charged particles. As such a display panel, for example, an electrophoretic display device (electrophoretic display medium) is known that encloses a liquid in which two kinds of electrophoretic fine particles (charged particles) with different color tones and different electrophoretic polarities are dispersed in a highly-insulating, low-viscosity, and non-colored dispersion medium (see, for example, Patent Document 1).

In this electrophoretic display device, if a voltage is applied across a pair of the electrodes and an electric field is generated in the dispersion medium, the electrophoretic fine particles are electrophoresed. Specifically, one kind of the electrophoretic fine particles migrate and adhere to one of the electrodes in accordance with their electrophoretic polarity (charging polarity). The other kind of electrophoretic fine particles migrate and adhere to the other electrode. In this case, the color tone of the electrophoretic fine particles adhering to the transparent electrode appears through the transparent display substrate and the transparent electrode that is formed on the transparent display substrate.

A material that is used for the electrodes of this display medium may typically be metal oxide such as indium tin oxide (ITO), for example. The metal oxide has a high level of surface energy and hydrophilic. At the same time, the surface of the charged particles may preferably be hydrophilic as well. It is because these particles improve in electrification property by holding on their own surfaces a polar solvent added into the display liquid. Accordingly, methods such as utilizing hydrophilic acrylic resin as a material of the charged particles or hydrophilizing their surfaces are employed.
Patent Document 1: Japanese Patent Application Laid-Open Publication No. Sho 62-269124

### Disclosure of the Invention

However, in the electrophoretic display device described in Patent Document 1, the hydrophilic charged particles come into contact with the hydrophilic electrode surfaces. Therefore, if the direction of the electric field is switched repeatedly when the device is in use, such a phenomenon would occur that some of the charged particles might adhere to the electrode surfaces and cease to move. If such a phenomenon occurs, a problem would occur that contrast between the colors displayed on the display substrate might be reduced or display might be uneven, thus deteriorating the image quality of the display panel.

It is an abject of the present disclosure to provide an electrophoretic display medium that can stabilize an image quality by preventing charged particles from adhering to surfaces of electrodes.

According to the present disclosure, an electrophoretic display medium that comprises a pair of substrates at least one of which is transparent and that are separated to face each other, a pair of electrodes that are respectively mounted on the pair of substrates to generate an electric field between the pair of substrates, a display liquid that is enclosed between the pair of substrates with a spacer therebetween, and charged particles that are contained in the display liquid and that migrate in the display liquid due to an influence of the electric field, characterized in that the display liquid is a dispersion medium comprising a non-polar solvent and a polar solvent, and each of the charged particles comprises a mother particle having a hydrophilic surface, and first child particles that are bonded to the surface of the mother particle, that have a first child particle diameter less than a mother particle diameter of the mother particle, and that have a hydrophobic surface

### Brief Description of the Drawings

FIG. 1 is a cross-sectional view of a display panel 2;
FIG. 2 is a schematic view showing an external appearance of a white charged particle 50;
FIG. 3 is a graph showing results of a contrast evaluation test; and
FIG. 4 is a schematic view showing an external appearance of a first charged particle 150, which is a modified example.

### [Best Mode for Carrying out the Invention]

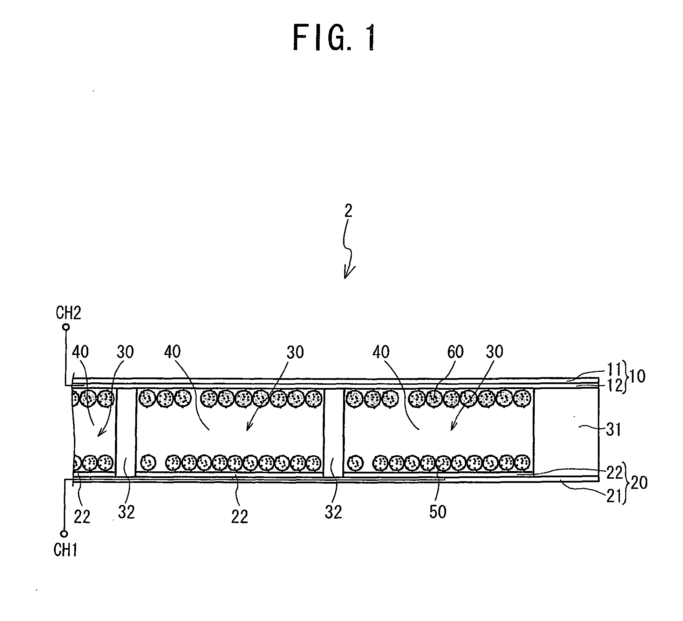

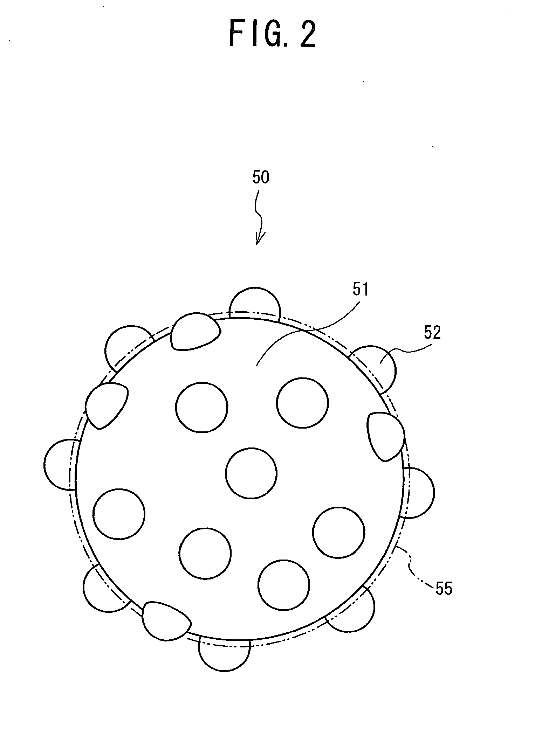

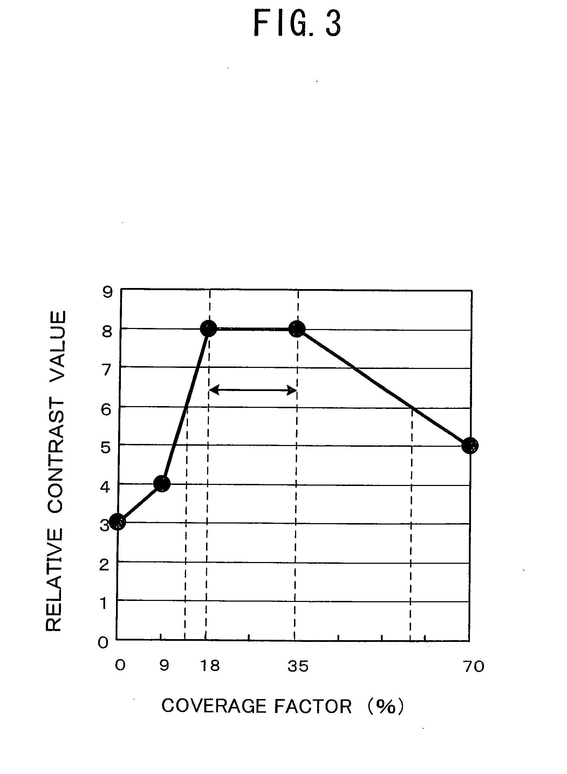

A display panel 2 according to an embodiment of the present disclosure will be described below with reference to the drawings. FIG. 1 is a cross-sectional view of the display panel 2, FIG. 2 is a schematic view showing the external appearance of a white charged particle 50, and FIG. 3 is a graph showing the results of a contrast evaluation test. It should be noted that in the display panel 2 shown in FIG. 1, an upper side surface of the display panel 2 is defined as an upper surface of the display panel 2 and the lower side surface is defined as a lower surface of the display panel 2.

The display panel 2 of the present embodiment is mounted to, for example, a portable electronic device. Then, by being driven and controlled by a control device (not shown), the display panel 2 can display a variety of images.

First, the configuration of the display panel 2 will be described below. As shown in FIG. 1, the display panel 2 comprises a display substrate 10 that is horizontally disposed and a back substrate 20 that is horizontally disposed below to face the display substrate 10 with a spacer 31 placed therebetween. Further, in a gap between the display substrate 10 and the back substrate 20, a plurality of display portions 30 separated from each other by a partition wall 32 are formed in a lattice arrangement.

Next, the structure of the display substrate 10 will be described below. As shown in FIG. 1, the display substrate 10 is made of a transparent member. This display substrate 10 includes a display layer 11 as a display surface. On the lower surface (back side surface) of the display layer 11, a transparent display electrode layer 12 to generate an electric field in the display portions 30 is provided. The display layer 11 is made of a highly transparent, highly insulating material. For example, polyethylene naphthalate, polyether sulfone, polyethylene terephthalate, polyimide, glass, etc. may be employed. On the other hand, the display electrode layer 12 is made of a highly transparent material that can be utilized as an electrode. For example, metal oxide such as indium tin oxide, tin oxide into which fluorine is doped, zinc oxide into which indium or aluminum oxide is doped, etc. may be employed It should be noted that in the present embodiment, the display layer 11 is a transparent glass substrate. On the other hand, the display electrode layer 12 is a transparent electrode made of indium tin oxide. Such a structure enables a user to visually recognize the display portion 30 through the transparent display substrate 10.

Next, the structure of the back substrate 20 will be described below. As shown in FIG.1, the back substrate 20 comprises a package support layer 21 that supports the display panel 2. Further, on the upper surface of the package support layer 21, a back electrode layer 22 is provided corresponding to each of the display portions 30. This back electrode layer 22 generates an electric field in each of the display portions 30. For the package support layer 21, a highly insulating material is employed. For example, an inorganic material such as glass or insulated metal film, or an organic material such as polyethylene terephthalate may be employed. It should be noted that in the present embodiment, the package support layer 21 is a glass substrate. On the other hand, the back electrode layer 22 is an electrode made of the indium tin oxide. Further, the layers that form the back substrate 20 may each be different in material from the display substrate 10 and may be transparent or colored.

Moreover, a channel CH1 is connected to each of the back electrode layers 22, and a channel CH2 is connected to the display electrode layer 12. These channels CH1 and CH2 are each controlled by the control device that is not shown, and a voltage is applied to the back electrode layer 22 and the display electrode layer 12. This enables generation of an electric field in the display portions 30.

Next, the structure of the display portion 30 will be described below. As shown in FIG. 1, the spacer 31 is disposed between the display substrate 10 and the back substrate 20. This spacer 31 is disposed along a circumference of the display panel 2. Further, by the display substrate 10, the back substrate 20, and the spacer 31, a sealed space is formed. This sealed space is evenly divided by the partition walls 32 to form the plurality of display portions 30. Further, each one of these display portions 30 corresponds to a pixel. In other words, the display panel 2 is a panel that has the plurality of display portions 30 arranged in the lattice arrangement. It should be noted that a resin film made of polyethylene terephthalate is used for the spacer 31 and the partition wall 32. In the sealed space of the display portions 30 of the display panel 2 having such a structure, a display liquid 40 is enclosed.

Next, the display liquid 40 will be described below. This display liquid 40 is a dispersion medium in which a plurality of white charged particles 50 and a plurality of black charged particles 60 are dispersed. The dispersion medium refers to a liquid substance in which particles (dispersoid) are dispersed. The display liquid 40 of the present embodiment employs the white charged particles 50 and the black charged particles 60 as dispersoids, and employs a liquid substance obtained by adding a predetermined quantity of a polar solvent 55 (see FIG. 2) to a non-polar solvent as a dispersion medium. As the non-polar solvent, a hydrocarbon-based solvent may typically be employed. In the present embodiment, a paraffin-based solvent (73 weight percent) (product name "Isopar G": made by Exxon Mobil Inc.) is employed. On the other hand, as the polar solvent 55, alcohol or interfacial active agent soluble in the non-polar solvent may be employed. In the present embodiment, hexanol, which is alcohol, is employed. If a part of the polar solvent 55 in the display liquid 40 stays around the white charged particle 50 and the black charged particle 60, the electrification property of these charged particles are improved.

Next, the white charged particle 50 and the black charged particle 60 will be described below. As shown in FIG. 1, the white charged particles 50 and the black charged particles 60 exist in the display liquid 40. In the present embodiment, the white charged particles 50 are negatively charged and the black charged particles 60 are positively charged. Accordingly, if an electric field is generated in the display portion 30 by biasing the display substrate 10 to a negative potential and the back substrate 20 to a positive potential, the black charged particles 60 migrate to the display substrate 10 and the white charged particles 50 migrate to the back substrate 20. In this case, black appears on the display portion 30 of the display substrate 10. On the other hand, if an opposite directional electric field is generated in the display portion 30 by biasing the display substrate 10 to a positive potential and the back substrate 20 to a negative potential, the black charged particles 60 migrate to the back substrate 20 and the white charged particles 50 migrate to the display substrate 10. In this case, black that has been displayed on the display portion 30 is switched to white.

Subsequently, particle structure of the white charged particle 50 and the black charged particle 60 will be described below. It should be noted that since the white charged particle 50 and the black charged particle 60 have the same particle structure except for the color and the polarity, mainly the white charged particle 50 will be described below. As shown in FIG. 2, the white charged particle 50 includes a mother particle 51. To the surface of this mother particle 51, a plurality of child particles 52 are bonded.

First, the mother particle 51 will be described below. The mother particle 51 is made of an electrifiable material. For example, acrylic resin etc. may be employed. It should be noted that besides acrylic resin, PC (polycarbonate), HDPE (high-density polyethylene), PP (polypropylene), ABS (acrylonitrile butadiene styrene), PET (polyethylene terephthalate), POM (polyacetal), etc. may be employed.

The mother particle 51 of the present embodiment is made of acrylic resin. The mother particle 51 contains titanium dioxide (TiO₂), which is a metal oxide. This causes the mother particle 51 to take on the color of white. Further, because acrylic resin is slightly hydrophilic and titanium dioxide is highly hydrophilic, the surface of the mother particle 51 is hydrophilic. It should be noted that the mother particle 51 of the present embodiment has a mean volume diameter of 5 µm.

Next, the child particle 52 will be described below. The child particle 52 is mechanically bonded to the mother particle 51 in a condition where the child particle 52 is partially buried in the surface of the mother particle 51. The child particle 52 has a diameter of 50 nm, which is about 1/100 of the diameter of the mother particle 51. Accordingly, the child particle 52 has little influence on the shape or the weight of the white charged particle 50 (and the black charged particle 60), so that it is possible to minimize the influence of the child particle 52 on the mobility of the white charged particle 50 (and the black charged particle 60). Further, the child particle 52 is made of a hydrophobic material. For example, hydrophobic silica fine particle (silicon dioxide: SiO₂) may be employed. It should be noted that the hydrophobic silica fine particle is obtained by imparting a hydrophobic property to silica by treating the surface of silica with various types of hydrophobizing agents. A plurality of such child particles 52 are bonded so that a coverage factor falls within the range from 15% to 55% inclusive with respect to the surface area of the mother particle 51. Thus, the surface of the mother particle 51 is not entirely covered by the child particles 52, so that the surface of the mother particle 51 is exposed on the surface of the white charged particle 50. An evaluation test concerning the coverage factor of the child particles 52 with respect to the surface area of the mother particle 51 will be described later.

It should be noted that like the white charged particle 50, the black charged particle 60 also comprises a mother particle, and a plurality of child particles are bonded to the surface of the mother particle. The mother particle is made of the same material (for example, acrylic resin etc.) as the mother particle 51 of the white charged particle 50. Therefore, the mother particle of the black charged particle 60 also has a hydrophilic surface. This mother particle contains carbon black and so has the color of black as a whole. Further, the black charged particle 60 may be improved in hydrophilic property by performing hydrophilization treatment on the carbon black.

Next, the white charged particle 50 in the display liquid 40 will be described below. As shown in FIG. 1, the white charged particles 50 are dispersed in the display liquid 40 enclosed in the display portion 30. Further, as described above, the mother particle 51 has a hydrophilic surface, which surface is exposed at a gap between the child particles 52. Therefore, as shown in FIG. 2, a functional group (hydroxyl group) of the polar solvent 55 (hexanol in the present embodiment) in the display liquid 40 is attracted to the surface of the mother particle 51. In other words, the polar solvent 55 stays on the gap between child particles 52. This state can improve the electrification property of the mother particle 51. The same holds true for the black charged particles 60.

Next, a method of bonding the child particles 52 to the mother particle 51 will be described below. As shown in FIG. 2, the child particles 52 are mechanically bonded to the surface of the mother particle 51 by hybridization. Specifically, the child particles 52 are bonded to the surface of the mother particle 51 in a condition where the child particles 52 are each partially buried in the surface of the mother particle 51. This hybridization process would go as follows. As a treatment equipment, the present inventor employed a hybridization system (NHS) made by NARA Machinery Co., Ltd. The NHS comprises a mixer that forms a mixture of different types of powders, a hybridizer that bonds the different types of fine powders to each other in a dry state, a collector, a control panel that controls these apparatuses, and a console panel.

First, 10 grams of a powder that provides mother particles and 0.4 gram of a powder that provides child particles are mixed by the mixer. Next, the mixed powders are put in the hybridizer. The hybridizer performs treatment at a speed of 9700 rpm, at 25°C, for three minutes. Then, in the hybridizer, mechanical and thermal energy, mainly impulse force, are applied to the particles while the particles are dispersed in a gas phase, thus fixation treatment is performed. The formed treated particles are rapidly collected by the collector. It is thus possible to form the white charged particles 50 in which the child particles 52 are bonded to the surface of the respective mother particles 51. The same holds true for the black charged particles 60. Further, by adjusting the number of the child particles 52 to be bonded to the surface of the mother particle 51, it is possible to adjust the degree of hydrophobic property to be imparted to the surface of the mother particle 51. Furthermore, by changing the degree of hydrophobic property of the child particles 52, it is also possible to adjust the degree of hydrophobic property to be imparted to the surface of the mother particle 51.

Next, the effects of preventing the white charged particles 50 and the black charged particles 60 from adhering to the display substrate 10 and the back substrate 20 will be described below. In the present embodiment, the white charged particles 50 are negatively charged and the black charged particles 60 are positively charged. Now, an electric field is generated in the display portion 30 by biasing the display substrate 10 to a positive potential and the back substrate 20 to a negative potential. Then, the white charged particles 50 migrate to the display substrate 10 and the black charged particles 60 migrate to the back substrate 20. In this case, the white charged particles 50 come into contact with the display electrode layer 12 of the display substrate 10. Further, the hydrophobic child particles 52 of the respective white charged particles 50 act repulsively on the hydrophilic surface of the display electrode layer 12. Accordingly, the white charged particles 50 can be prevented from adhering to the surface of the display electrode layer 12. On the other hand, the black charged particles 60 similarly come into contact with the back electrode layer 22 of the back substrate 20. In this case, the hydrophobic child particles of the respective black charged particles 60 act repulsively on the hydrophilic surface of the back electrode layer 22. Accordingly, the black charged particles 60 can be prevented from adhering to the surface of the back electrode layer 22. Next, if the direction of the electric field is switched to bias the display substrate 10 to the negative potential and the back substrate 20 to the positive potential, the white charged particles 50 migrate toward the back substrate 20 and the black charged particles 60 migrate toward the display substrate 10 (see FIG. 1). Also in this case, the same adherence prevention effects can be obtained as those described above. In such a manner, even if the direction of the electric field in the display portion 30 is switched repeatedly, the white charged particles 50 or the black charged particles 60 will not adhere to the display substrate 10 or the back substrate 20. It is thus possible to prevent deterioration in contrast of an image displayed on the display substrate 10.

Next, the coverage factor of the child particles 52 on the mother particle 51 will be described below. As shown in FIG. 2, in each of the white charged particles 50 and the black charged particles 60, the child particles 52 are bonded in a condition where the child particles 52 are spaced from each other so as not to totally cover the surface of the mother particle 51. The reason for this is to permit the polar solvent 55 to stay around the white charged particles 50 by partially exposing the surface of the mother particle 51. This improves the electrification property of the white charged particles 50 and the black charged particles 60, thus improves the mobility of the white charged particles 50 and the black charged particles 60. It is thus possible to improve the contrast of an image displayed on the display substrate 10, thereby sharpening the image displayed on the display substrate 10.

An evaluation test was conducted in order to check influences of the coverage factor of the child particles 52 on the contrast of an image displayed on the display substrate 10. In the evaluation test, the white charged particles 50 and the black charged particles 60 having different coverage factors of the child particles 52 were respectively prepared. Specifically, five types having coverage factors of 0%, 9%, 18%, 35%, and 70% were prepared. Further, a combination of the white charged particles 50 and the black charged particles 60 that have the same coverage factor were dispersed in the display liquid 40. Then, a luminance of white and black that appeared on the display portion 30 was measured to obtain a contrast ratio. It should be noted that the contrast ratio refers to a ratio of luminance between "white (maximum luminance)" and "black (minimum luminance) " on the screen. It is generally said that the higher the contrast ratio is, the sharper and clearer the image quality becomes on the screen. Here, a "relative contrast value" was employed in order to compare the contrast ratios for the respective coverage factors. The relative contrast value was calculated as a relative value, assuming that a contrast ratio for the coverage factor of 0% was taken as "3". That is, the relative contrast value for the coverage factor of 0% was three (3). It should be noted that the coverage factor of 0% applies to the mother particle 51 alone to which no child particle 52 is bonded. Further, as for a criterion of evaluation, a relative contrast value of 6 or higher was evaluated as an improved contrast ratio.

Next, the results of the contrast evaluation test will be described below. As shown in FIG. 3, if the relative contrast value was taken as 3 for the coverage factor of 0%, the relative contrast value for the coverage factors of 9% was 4, the relative contrast value for the coverage factors of 18% was 8, the relative contrast value for the coverage factors of 35% was also 8, and the relative contrast value for the coverage factors of 70% was 5. According to the above results, the relative contrast ratio would certainly be 6 or more if the coverage factor falls within a range from 15% to 55% inclusive. Therefore, it was confirmed that if the coverage factor falls within the range from 15% to 55% inclusive, the contrast ratio improves as compared to the case of the mother particle 51 alone (coverage factor of 0%).

Here, the results are considered. As the coverage factor is increased from 0% up to 15%, the respective surfaces of the white charged particles 50 and the black charged particles 60 gradually became more hydrophobic. Therefore, it is assumed that this led to an improvement in effects of preventing the white charged particles 50 and the black charged particles 60 from adhering to the display electrode layer 12 and the back electrode layer 22. It is assumed that this developed a tendency of a gradual increase in the contrast ratio. On the other hand, if the coverage factor exceeds 55%, the level of the hydrophobicity of the surfaces of the white charged particles 50 and the black charged particles 60 becomes higher, so that an amount of the polar solvent 55 that can stay around the white charged particles 50 and the black charged particles 60 becomes smaller. It is thus assumed that the electrification properties of the white charged particles 50 and the black charged particles 60 were decreased, thus resulting in a decrease in contrast ratio. Therefore, it was confirmed that the optimal range of the coverage factor falls within a range from 15% to 55% inclusive.

As described above, in the display panel 2 of the present embodiment, the white charged particles 50 and the black charged particles 60 dispersed in the display liquid 40 are in a condition where the plurality of hydrophobic child particles 52 are bonded to the hydrophilic surface of each of the mother particles 51. Accordingly, despite the fact that the surfaces of the display electrode layer 12 and the back electrode layer 22 are hydrophilic, the hydrophobic child particles 52 act repulsively, thereby preventing the hydrophilic mother particles 51 from adhering to the surfaces. Thus, even if the display panel 2 is used for a long time as switching the direction of the electric field repeatedly, it is possible to prevent the white charged particle 50 and the black charged particle 60 from adhering to the surfaces of the display electrode layer 12 and the back electrode layer 22. It is thus possible to prevent deterioration in the contrast of an image displayed on the display substrate 10. Further, the coverage factor of the child particles 52 with respect to the surface area of the mother particle 51 may be controlled within the range from 15% to 55% inclusive. Accordingly, it is possible to obtain an optimal contrast of the image displayed on the display substrate 10. It should be noted that by controlling the coverage factor of the child particles 52 within the range from 18% to 35% inclusive, a better contrast may be obtained.

Further, since the child particles 52 each have a smaller particle diameter than the particle diameter of the mother particle 51, it is possible to reduce a change in shape and a change in weight of the charged particles that may be caused by the bonding of the child particles 52. It is thus possible to reduce the influence of the bonding of the child particles 52 on the mobility of the charged particles. Moreover, by adjusting the number of the child particles 25 to be bonded to the surface of the mother particle 51, it is possible to adjust the level of the hydrophobic property to be imparted to the surface of the mother particle 51.

It should be noted that of course the electrophoretic display medium according to the present disclosure is not limited to the above embodiment, and can be modified variously. For example, in the present embodiment, hydrophilic acrylic resin is employed as a material for the mother particles 51, and so the mother particles 51 each have a hydrophilic surface. However, in a case where the mother particles 51 are not made of a hydrophilic material, or have a low level of hydrophilic property, hydrophilic child particles may additionally be bonded to the surfaces of the mother particles 51. It is thus possible to impart the hydrophilic property to the surfaces of the mother particles 51.

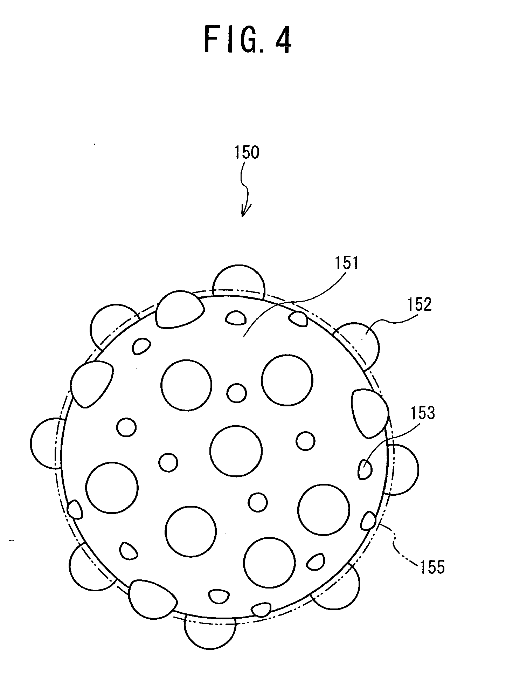

In the case of a charged particle 150 according to a modified example shown in FIG. 4, in addition to hydrophobic child particles 152 having a smaller diameter than a diameter of a mother particle 151, hydrophilic child particles 153 having a smaller diameter than the diameter of the hydrophobic child particles 152 are bonded to the surface of a mother particle 151. Such a structure can also impart the hydrophilic property to the surface of the mother particle 151, so that even non-hydrophilic resin can be used as the material of the mother particle 151. Then, because a polar solvent 155 will be attracted to the surface of the mother particle 151 to which the hydrophilic property is imparted, electrification property of the mother particle 151 can be improved. It should be noted that an example for sizes of the respective particles may be that the diameter of the mother particle 151 is 60 µm, the diameter of the hydrophobic child particle 152 is 50 nm, and the diameter of the hydrophilic child particles 153 is 8 nm.

In the above embodiment, each of a plurality of the display portions 30 separated from each other by the partition walls 32 provides a pixel. In a modified example thereof, for example, a plurality of the back electrode layers 22 may be formed in each display portion 30, to provide a plurality of pixels therein.

Further, in the above embodiment, the display electrode layer 12 is formed as an electrode common to all of the display portions 30 and the back electrode layers 22 are separately provided for each of the display portions 30. In a modified example thereof, for example, the back electrode layer 22 may be formed as an electrode common to all of the display portions 30 and the display electrode layers 12 may be separately provided for each of the display portions 30.

Further, although the above embodiment employs an external addition structure in which the child particles are bonded to the surface of the mother particle for both of the white charged particle 50 and the black charged particle 60, it is only necessary for at least the white charged particle 50 to have the external addition structure. The white charged particle 50 takes on the color of white because the white charged particle 50 contains a metal oxide (titanium dioxide in the above embodiment), and also has a highly hydrophilic surface because the metal oxide has a highly hydrophilic surface. Therefore, to inhibit the action thereof, hydrophobic child particles need to be bonded to the surface of the mother particle. On the other hand, as for the black charged particle 60, hydrophilic property of the surface can easily be reduced depending on the structure. Further, depending on the combination of the white charged particle 50, the black charged particle 60, and the electrodes, there may be some cases where the contrast of an image displayed on the display substrate 10 can be improved without bonding hydrophobic child particles to the surface of the black charged particle 50. Therefore, as far as at least the white charged particle 50 has the external addition structure, the contrast of an image displayed on the display substrate 10 can be improved even if the black charged particle 60 does not have the external addition structure.

Furthermore, a protection layer may be formed on the surface (lower surface) of the display electrode layer 12 and the surface (upper surface) of the back electrode layer 22 of the above embodiment.

Further, opposite to the above embodiment, the white charged particles 50 may be negatively charged, and the black charged particles 60 may be positively charged. Further, besides the combination of the black and white colors, any combination of charged particles having different two colors may be employed.

Furthermore, insulating fluoric resin etc. may be applied to the surfaces of the display electrode layer 12 and the back electrode layer 22. In this case, it is possible to reduce adhesion of the charged particles to the surfaces of the electrode layers.

As described above, according to the present disclosure, the polar solvent in the display liquid will stay on the surface of the hydrophilic mother particle of the charged particle, thus improving the electrification property of the charged particle. If an electric field is generated across a pair of the electrodes, the charged particles dispersed in the display liquid will migrate to a surface of one of the substrates in accordance with the polarity of the charged particles. In this case, even if the electrode has a hydrophilic surface, because hydrophobic first child particles are bonded to the surface of the mother particle, the first child particles will act repulsively to prevent adhesion of the mother particle to the surface of the electrode. In such a manner, even if the charged particles migrate to the surface of one of the substrates, the charged particles will not adhere to the electrode surface, thereby preventing deterioration in contrast and thus in image quality.

Furthermore, according to the present disclosure, the coverage factor of the first child particles with respect to the surface area of the mother particle may fall within the range from 15% to 55% inclusive. Thus, it may be possible to prevent the charged particles from adhering to the surface of the electrode effectively. Further, the surface of the mother particle may be exposed at a predetermined percentage over the surface of the charged particle, thereby permitting the polar solvent to stay on the surface of the mother particle. Accordingly, the electrification property of the charged particle may be improved.

Furthermore, according to the present disclosure, since the mother particle may be made of resin having a functional group, by binding a molecule of the polar solvent to the functional group, it may be possible to permit the polar solvent to stay on the surface of the charged particle. Accordingly, it may be possible to eliminate the necessity for treatment to make the surface of the mother particle hydrophilic.

Additionally, according to the present disclosure, the hydrophilic second child particles may be bonded to the surface of the mother particle, so that it may be possible to impart the hydrophilic property to the mother particle. Furthermore, the second child particles may have a smaller particle diameter than the first child particles, so that when the charged particles migrate to the substrate surface, the first child particles may come into contact with the substrate surface more easily than the second child particles. This may eliminate the possibility of impairing the effects of the first child particles to prevent adhesion to the substrate surface. Further, because the shape or the weight of the charged particle will not greatly be changed, it may be possible to suppress the influence on the mobility of the charged particle.

Additionally, according to the present disclosure, the charged particle may comprise a white first charged particle and a second charged particle having a color other than white, so that it may be possible to display white or the color other than white on a transparent substrate surface by switching the direction of a electric field to be generated between the pair of electrodes. Further, the mother particle of the white first charged particle may contain a hydrophilic metal oxide, so that it may be possible to improve the degree of the hydrophilic property of the surface of the mother particle. Accordingly, it may be possible to color the charged particle white and, at the same time, improve the degree of the hydrophilic property of the surface of the mother particle.

Additionally, according to the present disclosure, the mother particle of the second charged particle may contain carbon black, so that the second charged particle may be colored black. Further, the first child particle may be bonded to the surface of each of the first charged particles and the second charged particles, so that it may be possible to prevent both the first charged particles and the second charged particles from adhering to the pair of electrode surfaces. Therefore, the image quality may further be improved.

### [Industrial Applicability]

The electrophoretic display medium of the present disclosure can be applied to a variety of electronic apparatus equipped with a display portion.

## Claims

1. An electrophoretic display medium that comprises a pair of substrates at least one of which is transparent and that are separated to face each other, a pair of electrodes that are respectively mounted on the pair of substrates to generate an electric field between the pair of substrates, a display liquid that is enclosed between the pair of substrates with a spacer therebetween, and charged particles that are contained in the display liquid and that migrate in the display liquid due to an influence of the electric field, **characterized in that**
the display liquid is a dispersion medium comprising a non-polar solvent and a polar solvent, and
each of the charged particles comprises
a mother particle having a hydrophilic surface, and
first child particles that are bonded to the surface of the mother particle, that have a first child particle diameter less than a mother particle diameter of the mother particle, and that have a hydrophobic surface.

2. The electrophoretic display medium according to claim 1, **characterized in that** a coverage factor of the first child particles with respect to a surface area of the mother particle is within a range from 15% to 55% inclusive.

3. The electrophoretic display medium according to claim 1 or 2, **characterized in that**
the mother particle is made of resin having a functional group, and
the mother particle has a hydrophilic property due to bonding of a molecule of the polar solvent to the functional group of the resin of the mother particle.

4. The electrophoretic display medium according to claim 1 or 2, **characterized in that** the mother particle has a hydrophilic property due to bonding of hydrophilic second child particles to the surface of the mother particle, the hydrophilic second child particles having a second child particle diameter less than the first child particle diameter of the first child particles.

5. The electrophoretic display medium according to any one of claims 1 through 4, **characterized in that**
the charged particles comprises
a first charged particles having a color of white, and
a second charged particles having a color other than white,
each of the first charged particles has a color of white due to a metal oxide contained in the mother particle of each of the first charged particles, and
the first child particles are bonded to the surface of the mother particle of at least each of the first charged particles among the first charged particles and the second charged particles.

6. The electrophoretic display medium according to claim 5, **characterized in that**
each of the second charged particles has a color of black due to carbon black contained in the mother particle of each of the second charged particles, and
the first child particles are bonded to the surface of the mother particle of each of the first charged particles and the second charged particles.
